# EUROPÄISCHE PATENTANMELDUNG

(11) **EP 4 236 339 A1**
(43) Veröffentlichungstag der Anmeldung: **30.08.2023**
(21) Anmeldenummer: 23155073.2
(22) Anmeldetag: 06.02.2023
(51) Int. Cl.: H04N 23/68, F16M 11/04, F16M 11/20, G03B 17/56

(54) **KAMERASTABILISIERUNGSANORDNUNG**

(30) Priorität: 23.02.2022 DE 102022104329
(71) Anmelder: Arnold & Richter Cine Technik GmbH & Co. Betriebs KG, 80807 München (DE)
(72) Erfinder: SCHALLER, Curt, 81543 München (DE)
(74) Vertreter: Manitz Finsterwald Patent- und Rechtsanwaltspartnerschaft mbB

(57) **Zusammenfassung**

Bei einer Kamerastabilisierungsanordnung mit einem bezüglich mehrerer Freiheitsgrade beweglichen Kamerahalter, einem elektrischen Antrieb für den Kamerahalter, einer an dem Kamerahalter befestigten elektronischen Kamera, und einem Bewegungssensor ist eine Steuereinrichtung dazu ausgebildet, in Ansprechen auf Bewegungssensorsignale des Bewegungssensors den elektrischen Antrieb zu steuern, um eine halterseitige Bildstabilisierung durchzuführen, und eine Bilderfassungseinrichtung der Kamera zu steuern, um eine kameraseitige Bildstabilisierung durchzuführen.

## Beschreibung

Die Erfindung betrifft eine Kamerastabilisierungsanordnung, mit einem beweglichen Kamerahalter und einer an dem Kamerahalter befestigten elektronischen Kamera.

Eine derartige Kamerastabilisierungsanordnung kann insbesondere bei einer Aufnahme von Bewegtbildsequenzen, beispielsweise einer Szene eines Kinofilms, dazu verwendet werden, eine Stabilisierung des erfassten Bildinhalts gegenüber Störeinflüssen aufgrund von unerwünschten oder unbeabsichtigten Bewegungen der Kamera zu erreichen. Besonders wichtig ist eine Bildstabilisierung, wenn die Kamera während der Aufnahme in verschiedene Positionen bewegt wird, beispielsweise wenn ein Kameramann die Kamera über eine Trägerstruktur am Körper trägt oder wenn die Kamera an einem Kran, einem Fahrzeug oder dergleichen befestigt ist. Eine derartige Bildstabilisierung kann bei einer Stillbildkamera zur Anwendung gelangen und ist jedoch insbesondere bei einer Laufbildkamera besonders wichtig.

Derartige Kamerastabilisierungsanordnungen sind beispielsweise aus US 5963749 A, DE 10 2012 107 265 A1 und DE 10 2015 107 483 A1 bekannt, auf die hinsichtlich verschiedener möglicher Ausführungsformen von Kamerastabilisierungsanordnungen verwiesen wird.

Ein Problem bei bekannten Kamerastabilisierungsanordnungen besteht darin, dass nicht alle auftretenden Störeinflüsse auf die Ausrichtung der Kamera gleichermaßen gut kompensiert werden. In manchen Fällen können Störeinflüsse sogar unerwünscht überkompensiert werden.

Es ist eine Aufgabe der Erfindung, eine Kamerastabilisierungsanordnung anzugeben, die eine verbesserte Bildstabilisierung gegenüber unterschiedlichen Störeinflüssen auf die Ausrichtung der Kamera ermöglicht.

Diese Aufgabe wird durch eine Kamerastabilisierungsanordnung mit den Merkmalen des Anspruchs 1 gelöst.

Die Kamerastabilisierungsanordnung weist einen Kamerahalter auf, an dem die Kamera befestigt ist, insbesondere starr befestigt ist. Der Kamerahalter ist beweglich, insbesondere in sich beweglich und/oder an einer Trägerstruktur beweglich gelagert. Der Kamerahalter kann beispielsweise mehrere Elemente aufweisen, die relativ zueinander beweglich sind (z.B. äußerer Rahmen und in dem äußeren Rahmen beweglich gelagerter innerer Rahmen). Die Trägerstruktur kann beispielsweise ein sogenanntes Rig, einen Pendelarm oder einen Schwebearm aufweisen. Der Kamerahalter und die zugeordnete Trägerstruktur können beispielsweise ein sogenanntes Gimbal bilden. Die Beweglichkeit des Kamerahalters kann gemäß translatorischen Freiheitsgraden (beispielsweise bei Verwendung eines Kardangelenks) und/oder rotatorischen Freiheitsgraden erfolgen (beispielsweise bei Verwendung eines Lagerrings). Ein steuerbarer elektrischer Antrieb vermag, den Kamerahalter - und somit die hieran befestigte Kamera - gemäß den Freiheitsgraden anzutreiben. Hierfür kann der elektrische Antrieb beispielsweise einen oder mehrere Elektromotoren aufweisen. Der elektrische Antrieb kann somit eine Bewegung von verschiedenen Elementen des Kamerahalters relativ zueinander und/oder eine Bewegung des Kamerahalters relativ zu einer Trägerstruktur bewirken. Der elektrische Antrieb kann es somit insbesondere ermöglichen, gemäß einem Benutzerbefehl den Kamerahalter oder ein Element des Kamerahalters - und somit die hieran befestigte Kamera - in einer gewünschten Richtung um ein gewünschtes Maß aktiv zu bewegen, beispielsweise um elektromotorisch einen Kameraschwenk ("pan") oder eine Kippbewegung ("tilt") durchzuführen.

Bei der Kamera kann es sich insbesondere um eine Laufbildkamera handeln. Die Kamera weist eine Bilderfassungseinrichtung auf, welche zumindest einen elektronischen Bildsensor aufweist, um in Abhängigkeit von einfallendem Licht Bildsensorsignale zu erzeugen. Der Bildsensor kann beispielsweise eine zweidimensionale Matrix von lichtempfindlichen Elementen in CMOS- oder CCD-Technologie aufweisen. Die Bilderfassungseinrichtung der Kamera kann noch weitere Komponenten aufweisen, insbesondere zumindest eine Optikkomponente, wie nachfolgend noch erläutert wird.

Die Kamerastabilisierungsanordnung weist ferner zumindest einen Bewegungssensor auf, der Bewegungen des Kamerahalters - und somit der hieran befestigten Kamera - in mehreren Richtungen detektiert und entsprechende Bewegungssensorsignale erzeugt. Hierfür können mehrere Bewegungssensoren vorgesehen sein, die an verschiedenen Elementen des Kamerahalters und/oder an der Kamera (insbesondere auch innerhalb der Kamera) angeordnet sein können. Der jeweilige Bewegungssensor kann beispielsweise einen statischen oder dynamischen Beschleunigungssensor aufweisen, insbesondere einen mehrachsigen derartigen Beschleunigungssensor.

Die Kamerastabilisierungsanordnung weist ferner eine Steuereinrichtung auf, die dazu ausgebildet ist, in Ansprechen auf die von dem oder den Bewegungssensor(en) erzeugten Bewegungssensorsignale den elektrischen Antrieb zu steuern, um eine halterseitige Bildstabilisierung durchzuführen, und in Ansprechen auf die Bewegungssensorsignale auch die Bilderfassungseinrichtung zu steuern, um eine kameraseitige Bildstabilisierung durchzuführen. Somit wird zum einen über den Kamerahalter eine Bildstabilisierung vorgenommen, indem der Kamerahalter angetrieben wird, um äußere Störeinflüsse auf die Ausrichtung der Kamera zu kompensieren (als eine elektromechanische Bildstabilisierung). Für die halterseitige Bildstabilisierung steuert die Steuereinrichtung den elektrischen Antrieb derart an, dass der Kamerahalter zu Kompensationsbewegungen angetrieben wird, die zumindest einigen der detektierten Bewegungen richtungsmäßig entgegengesetzt sind und betragsmäßig entsprechen. Zum anderen veranlasst die Steuereinrichtung auch die Bilderfassungseinrichtung der Kamera zu einer Bildstabilisierung (als eine elektronische und/oder elektromechanische Bildstabilisierung).

Durch die Möglichkeit, eine halterseitige Bildstabilisierung und eine kameraseitige Bildstabilisierung vorzunehmen und diese aufeinander abzustimmen, kann auf verschiedene Störeinflüsse und/oder auf verschiedene Zustände der Kamerastabilisierungsanordnung unterschiedlich reagiert werden, um entweder die halterseitige Bildstabilisierung oder die kameraseitige Bildstabilisierung oder eine Kombination hiervon durchzuführen. Dies ermöglicht für verschiedene Störeinflüsse und/oder verschiedene Zustände der Kamerastabilisierungsanordnung eine optimierte Bildstabilisierung. Da sowohl die halterseitige Bildstabilisierung als auch die kameraseitige Bildstabilisierung auf denselben Bewegungssensorsignalen basiert, ist eine genaue Abstimmung der halterseitigen Bildstabilisierung und der kameraseitigen Bildstabilisierung aufeinander möglich.

Sofern im Zusammenhang mit der Erfindung auf eine Ausrichtung des Kamerahalters oder auf ein elektrisches Antreiben des Kamerahalters Bezug genommen wird, bezieht sich dies auch auf lediglich einzelne Elemente des Kamerahalters, falls der Kamerahalters mehrere relativ zueinander bewegliche Elemente aufweist.

Die Steuereinrichtung der Kamerastabilisierungsanordnung kann eine einzige physische Einheit umfassen. Die Steuereinrichtung der Kamerastabilisierungsanordnung kann jedoch auch mehrere Untereinheiten aufweisen, wobei beispielsweise eine erste Steuerschaltung dem Kamerahalter und dem elektrischen Antrieb zugeordnet ist und eine zweite Steuerschaltung der Bilderfassungseinrichtung der Kamera zugeordnet ist. Die zweite Steuerschaltung kann beispielsweise auch Teil einer Steuereinheit der Kamera sein. Die erste Steuerschaltung und die zweite Steuerschaltung können physisch getrennt sein und können jedoch insbesondere signaltechnisch miteinander verbunden sein. Zumindest eine der Steuerschaltungen, oder sowohl die erste Steuerschaltung als auch die zweite Steuerschaltung, kann/können mit dem zumindest einen Bewegungssensor signaltechnisch verbunden sein. Die Steuereinrichtung (bzw. die erste Steuerschaltung und die zweite Steuerschaltung) kann beispielsweise eine oder mehrere der folgenden Einrichtungen umfassen: einen integrierten Schaltkreis (IC), einen Mikroprozessor, eine zentrale Recheneinheit (CPU), eine Anwendungsspezifische Integrierte Schaltung (ASIC) oder ein Field Programmable Gate Array (FPGA).

Weitere Ausführungsformen der Erfindung sind nachfolgend erläutert.

Bei einigen Ausführungsformen ist die Steuereinrichtung dazu ausgebildet, zwischen zumindest einer (sogenannten) Halterkompensation-geeigneten Art der detektierten Bewegungen und zumindest einer (sogenannten) Halterkompensation-ungeeigneten Art der detektierten Bewegungen zu unterscheiden. Eine jeweilige Halterkompensation-geeignete oder Halterkompensation-ungeeignete Art der detektierten Bewegungen kann vorbestimmt sein und insbesondere als ein festes Attribut einer Bewegungsart (z.B. Bewegungsrichtung, Bewegungsmaß und/oder Bewegungsmuster) gespeichert sein, beispielsweise in einem der Steuereinrichtung zugeordneten nicht-flüchtigen Speicher (z.B. EEPROM, Flash-EEPROM). Alternativ können zu einer jeweiligen Halterkompensation-geeigneten oder Halterkompensation-ungeeigneten Art der detektierten Bewegungen Ermittlungsparameter vorbestimmt und insbesondere gespeichert sein, aus denen die Steuereinrichtung situationsabhängig variabel die Unterscheidung zwischen einer Halterkompensation-geeigneten Art und einer Halterkompensation-ungeeigneten Art der detektierten Bewegungen bestimmen kann; bei einer solchen Ausführungsform kann die Unterscheidung beispielsweise in Abhängigkeit von einer aktuellen Positionseinstellung des elektrischen Antriebs und/oder in Abhängigkeit von einer aktuellen Ausrichtung des Kamerahalters erfolgen, wie nachfolgend noch erläutert wird.

Die Steuereinrichtung veranlasst den elektrischen Antrieb des Kamerahalters zur Durchführung der halterseitigen Bildstabilisierung lediglich für die zumindest eine Halterkompensation-geeigneten Art der detektierten Bewegungen, nicht jedoch zur Durchführung der halterseitigen Bildstabilisierung für die zumindest eine Halterkompensation-ungeeignete Art der detektierten Bewegungen. Hingegen veranlasst die Steuereinrichtung die Bilderfassungseinrichtung zur Durchführung der kameraseitigen Bildstabilisierung für die zumindest eine Halterkompensation-ungeeignete Art der detektierten Bewegungen. Dies schließt nicht aus, dass die Steuereinrichtung - ergänzend zu der halterseitigen Bildstabilisierung - die Bilderfassungseinrichtung zur Durchführung der kameraseitigen Bildstabilisierung auch für die zumindest eine Halterkompensation-geeignete Art der detektierten Bewegungen ansteuert. Somit können die zur Verfügung stehenden Möglichkeiten der Bildstabilisierung optimal genutzt werden.

Die zumindest eine Halterkompensation-geeignete Art der detektierten Bewegungen kann beispielsweise eine detektierte rotatorische Bewegung des Kamerahalters und/oder der Kamera umfassen. Alternativ oder zusätzlich kann die zumindest eine Halterkompensation-ungeeignete Art der detektierten Bewegungen beispielsweise eine detektierte translatorische Bewegung des Kamerahalters und/oder der Kamera umfassen. Die jeweilige rotatorische Bewegung oder translatorische Bewegung des Kamerahalters und/oder der Kamera kann sich insbesondere auf eine Bewegungsebene beziehen, die der Erstreckungsebene des Bildsensors entspricht (d.h. auf eine Bewegungsebene, die senkrecht zu der optischen Achse der Kamera steht). Die Identifizierung einer detektierten Bewegung als eine Halterkompensation-geeignete rotatorische Bewegung oder als eine Halterkompensation-ungeeignete translatorische Bewegung kann sich auch jeweils lediglich auf eine Bewegungskomponente der detektierten Bewegungen beziehen.

Somit liegen einfache und schnell prüfbare Kriterien für ein Identifizieren einer Halterkompensation-geeignete Art der detektierten Bewegungen oder einer Halterkompensation-ungeeigneten Art der detektierten Bewegungen durch die Steuereinrichtung vor.

Die Steuereinrichtung kann insbesondere dazu ausgebildet sein, die zumindest eine Halterkompensation-ungeeignete Art der detektierten Bewegungen - wie bereits erwähnt - in Abhängigkeit von einer aktuellen Positionseinstellung des elektrischen Antriebs und/oder in Abhängigkeit von einer aktuellen Ausrichtung des Kamerahalters zu bestimmen. Hierdurch kann berücksichtigt werden, wie gut die zur Verfügung stehenden Freiheitsgrade des elektrischen Antriebs sich für Kompensationsbewegungen des Kamerahalters eignen. Die Steuereinrichtung kann die aktuelle Positionseinstellung des elektrischen Antriebs beispielsweise aus einem Sollwert der Steuerung des elektrischen Antriebs oder aus einem Istwert ermitteln, welcher mittels wenigstens eines Positionssensors bestimmt wird. Insbesondere kann die aktuelle Positionseinstellung des elektrischen Antriebs auch eine Relativposition von zwei oder mehr Elementen des elektrischen Antriebs umfassen bzw. die Bestimmung einer solchen Relativposition ermöglichen. Ferner kann die aktuelle Positionseinstellung des elektrischen Antriebs Rückschlüsse darüber ermöglichen, welches Ausmaß einer Kompensationsbewegung des Kamerahalters oder einzelner Elemente hiervon noch möglich ist, beispielsweise bevor ein physischer Anschlag erreicht wird. Entsprechendes gilt hinsichtlich der aktuellen Ausrichtung des Kamerahalters. Die aktuelle Ausrichtung des Kamerahalters im Raum, d.h. die Ausrichtung des Kamerahalters relativ zu der Richtung der Schwerkraft, kann durch den zumindest einen Bewegungssensor und/oder durch zusätzliche Sensoren ermittelt werden.

Die Kenntnis der aktuellen Ausrichtung des Kamerahalters kann von der Steuereinrichtung dazu verwendet werden zu beurteilen, ob eine den detektierten Bewegungen entgegenwirkende Kompensationsbewegung des Kamerahalters mittels des elektrischen Antriebs durchgeführt werden kann. Dies ist (abhängig von den Freiheitsgraden des elektrischen Antriebs) nämlich nicht immer oder nicht immer in geeigneter Weise möglich. Somit kann die Steuereinrichtung also dazu ausgebildet sein, die detektierten Bewegungen situationsabhängig variabel einer Halterkompensation-geeigneten Art oder einer Halterkompensation-ungeeigneten Art zuzuordnen und die halterseitige Bildstabilisierung und/oder die kameraseitige Bildstabilisierung entsprechend dieser Zuordnung auszuwählen oder (im Falle einer Kombination) relativ zueinander zu gewichten.

Zusätzlich oder alternativ zu den vorstehend erläuterten Unterscheidungen kann die Steuereinrichtung dazu ausgebildet sein, die halterseitige Bildstabilisierung für zumindest eine der mehreren Richtungen der detektierten Bewegungen (insbesondere für einige oder sämtliche der mehreren Richtungen) lediglich dann durchzuführen, wenn eine Frequenz der detektierten Bewegungen geringer ist als ein erster Grenzwert; und die kameraseitige Bildstabilisierung für die jeweilige(n) Richtung(en) lediglich dann durchzuführen, wenn die Frequenz der detektierten Bewegungen größer ist als ein zweiter Grenzwert. Bei derartigen Ausführungsformen kann die Steuereinrichtung die detektierten Bewegungen hinsichtlich einer Frequenz auswerten. Der Begriff der Frequenz ist im vorliegenden Zusammenhang breit zu verstehen und umfasst den Kehrwert einer Zeitdauer, die einer Bewegung in einer ersten Richtung und einer nachfolgenden Bewegung in einer der ersten Richtung entgegengesetzten Richtung zugeordnet werden kann. Die Frequenz einer detektierten Bewegung kann bereits aufgrund der Geschwindigkeit einer detektierten Bewegung abgeschätzt werden. Sobald eine gegenläufige Bewegung erfolgt, kann die Frequenz der detektierten Bewegung noch genauer abgeschätzt werden. Sobald nochmals eine Richtungsumkehr erfolgt, kann die Frequenz bereits mit einer hinreichenden Genauigkeit ermittelt werden. Derartige Untersuchungen können für verschiedene räumliche Richtungen der detektierten Bewegungen separat oder auch in Kombination miteinander durchgeführt werden.

In Abhängigkeit von einer ermittelten Frequenz einer detektierten Bewegung kann die Steuereinrichtung danach unterscheiden, ob die halterseitige Bildstabilisierung und/oder die kameraseitige Bildstabilisierung durchgeführt werden soll. Hierfür kann ein erster Grenzwert der ermittelten Frequenz berücksichtigt werden. Wenn die ermittelte Frequenz geringer ist als der erste Grenzwert, wird die halterseitige Bildstabilisierung als geeignet angesehen. Wenn die ermittelte Frequenz hingegen größer ist als ein zweiter Grenzwert, wird die kameraseitige Bildstabilisierung als geeignet angesehen. Hierdurch kann berücksichtigt werden, dass die kameraseitige Bildstabilisierung beispielsweise elektronisch (insbesondere durch ein sogenanntes Pixel Shift, wie nachfolgend noch erläutert) oder elektromechanisch mit relativ geringen anzutreibenden Massen (insbesondere durch einen Piezoantrieb, wie nachfolgend noch erläutert) durchgeführt werden kann und sich somit besonders gut für hohe Frequenzen der Störeinflüsse bzw. der detektierten Bewegungen eignet.

Bei einigen Ausführungsformen können der erste Grenzwert und der zweite Grenzwert identisch gewählt sein. Somit bilden der erste Grenzwert und der zweite Grenzwert einen gemeinsamen Grenzwert für die Wahl entweder der halterseitigen Bildstabilisierung oder der kameraseitigen Bildstabilisierung.

Bei anderen Ausführungsformen kann der erste Grenzwert geringer als der zweite Grenzwert gewählt sein, wobei der erste Grenzwert und der zweite Grenzwert einen Übergangsfrequenzbereich begrenzen, in dem die Steuereinrichtung sowohl die halterseitige Bildstabilisierung als auch die kameraseitige Bildstabilisierung durchführt. Bei derartigen Ausführungsformen kann die Steuereinrichtung also sowohl die halterseitige Bildstabilisierung als auch die kameraseitige Bildstabilisierung veranlassen, wenn für eine jeweilige Richtung der detektierten Bewegungen ermittelte Frequenz der detektierten Bewegungen zwischen dem (niedrigeren) erstem Grenzwert und dem (höheren) zweiten Grenzwert liegt. In dem Übergangsfrequenzbereich kann beispielsweise ein kontinuierlicher Übergang zwischen der halterseitigen Bildstabilisierung und der kameraseitigen Bildstabilisierung vorgesehen sein.

Wie vorstehend erläutert, kann bei einigen Ausführungsformen die Steuereinrichtung dazu ausgebildet sein, die halterseitige Bildstabilisierung für einige (insbesondere sämtliche) der mehreren Richtungen der detektierten Bewegungen lediglich dann durchzuführen, wenn eine Frequenz der detektierten Bewegungen geringer ist als ein erster Grenzwert; und die kameraseitige Bildstabilisierung für die entsprechenden Richtungen lediglich dann durchzuführen, wenn die Frequenz der detektierten Bewegungen größer ist als ein zweiter Grenzwert. Bei derartigen Ausführungsformen kann die Steuereinrichtung ferner dazu ausgebildet sein, die halterseitige Bildstabilisierung für verschiedene der mehreren (räumlichen) Richtungen der Bewegungen in Abhängigkeit von unterschiedlichen ersten Grenzwerten durchzuführen. Alternativ oder zusätzlich kann die Steuereinrichtung dazu ausgebildet sein, die kameraseitige Bildstabilisierung für verschiedene der mehreren (räumlichen) Richtungen der Bewegungen in Abhängigkeit von unterschiedlichen zweiten Grenzwerten durchzuführen.

Somit kann hinsichtlich der Grenzwerte für die ermittelten Frequenzen der detektierten Bewegungen zusätzlich eine Unterscheidung nach verschiedenen Richtungen (also Ausrichtungen im Raum) erfolgen, beispielsweise nach der horizontalen oder der vertikalen Richtung. Somit können für verschiedene Richtungen unterschiedliche Grenzwerte des Übergangs zwischen der halterseitigen Bildstabilisierung und der kameraseitigen Bildstabilisierung vorgesehen sein. Hierdurch kann anhand eines einfachen Unterscheidungskriterium berücksichtigt werden, dass eine der beiden zur Verfügung stehenden Arten der Bildstabilisierung nicht allein hinsichtlich einer Frequenz der Störeinflüsse besser geeignet ist als die andere Art der Bildstabilisierung, sondern dass dies auch von einer Richtung des jeweiligen Störeinflusses abhängen kann (insbesondere entsprechend den Freiheitsgraden des elektrischen Antriebs des Kamerahalters).

Bei einigen Ausführungsformen kann die Kamerastabilisierungsanordnung eine Eingabeeinrichtung aufweisen, die dazu ausgebildet ist, Benutzerbefehle für eine erwünschte Bewegung des Kamerahalters zu empfangen. Eine derartige Eingabeeinrichtung kann beispielsweise einen Steuerknüppel (Joystick), eine Wippe oder ein Drehrad aufweisen. Die Steuereinrichtung kann dazu ausgebildet sein, den elektrischen Antrieb in Ansprechen auf einen empfangenen Benutzerbefehl zu steuern, um eine Ausrichtung des Kamerahalters zu ändern. Somit kann der Benutzer (z.B. Kameramann) durch Betätigen der Eingabeeinrichtung den Kamerahalter und somit die Kamera aktiv bewegen, beispielsweise um einen Kameraschwenk oder eine Kippbewegung durchzuführen. Die Steuereinrichtung kann bei derartigen Ausführungsformen dazu ausgebildet sein, die kameraseitige Bildstabilisierung in Ansprechen auf den empfangenen Benutzerbefehl auszusetzen (also zu unterdrücken) oder zu modifizieren.

Somit können Bewegungssensorsignale des oder der Bewegungssensors/ Bewegungssensoren gezielt ignoriert oder nur eingeschränkt berücksichtigt werden, wenn bereits aufgrund einer aktiven Ansteuerung des elektrischen Antriebs bekannt ist, dass eine erwünschte Bewegung des Kamerahalters erfolgt. Ein typischer Anwendungsfall ist beispielsweise ein Kameraschwenk, bei dem die einsetzende Änderung der horizontalen Ausrichtung der Kamera nicht durch die kameraseitige Bildstabilisierung unterdrückt oder verzögert werden soll (Vermeidung eines sogenannten Slip Stick-Effekts). Die kameraseitige Bildstabilisierung kann in diesem Fall zumindest für diejenige Richtung einer detektierten Bewegung, welche einer Richtung des empfangenen Benutzerbefehls und/oder der entsprechend durchgeführten Antriebsbewegung des Kamerahalters entspricht, ausgesetzt oder modifiziert werden. Im Falle des Aussetzens der kameraseitigen Bildstabilisierung erfolgt insoweit keine kameraseitige Bildstabilisierung (z.B. kein Pixel Shift). Im Falle des Modifizierens der kameraseitigen Bildstabilisierung kann die kameraseitige Bildstabilisierung beispielsweise abgeschwächt durchgeführt und/oder richtungsselektiv durchgeführt werden. Eine abgeschwächte kameraseitige Bildstabilisierung bedeutet, dass diese in einem geringeren Maße durchgeführt wird als in einem Betrieb der Kamerastabilisierungsanordnung ohne einen empfangenen und ausgeführten Benutzerbefehl.

Alternativ oder zusätzlich kann die Kamerastabilisierungsanordnung zumindest einen Positionssensor aufweisen, der dazu ausgebildet ist, ein Positionssignal zu erzeugen, welches eine vom Benutzer manuell bewirkte Positionsänderung des Kamerahalters repräsentiert. Diese Positionsänderung kann sich auf eine vom Benutzer manuell bewirkte Bewegung des Kamerahalters relativ zu einer Trägerstruktur der Kamerastabilisierungsanordnung (z.B. Rig, Pendelarm, Schwebearm oder Stativ) und/oder auf eine vom Benutzer manuell bewirkte Bewegung von verschiedenen Elementen des Kamerahalters relativ zueinander beziehen. Der Positionssensor kann beispielsweise einen Drehwinkelgeber aufweisen (z.B. als Inkrementalgeber oder als Absolutwertgeber). Die Steuereinrichtung kann bei derartigen Ausführungsformen dazu ausgebildet sein, in Ansprechen auf das Positionssignal des Positionssensors die kameraseitige Bildstabilisierung auszusetzen oder zu modifizieren. Somit können Bewegungssensorsignale des oder der Bewegungssensors/Bewegungssensoren gezielt ignoriert oder nur eingeschränkt berücksichtigt werden, wenn aufgrund einer manuellen Bewegung des Kamerahalters (einschließlich seiner verschiedenen Elemente) bekannt ist, dass eine erwünschte Bewegung der Kamera erfolgt. Die kameraseitige Bildstabilisierung kann in diesem Fall zumindest für diejenige Richtung einer detektierten Bewegung, welche einer Richtung der manuell ausgeführten Bewegung entspricht, ausgesetzt oder modifiziert werden, wie vorstehend im Zusammenhang mit einem empfangenen Benutzerbefehl erläutert. Somit kann auch im Falle einer manuellen Änderung der Ausrichtung der Kamera beispielsweise der erläuterte Slip Stick-Effekt verhindert werden.

Bei einigen Ausführungsformen kann die Steuereinrichtung dazu ausgebildet sein, die Bewegungssensorsignale daraufhin auszuwerten, ob ein vorbestimmtes Bewegungsmuster von horizontalen und/oder vertikalen Bewegungen identifiziert werden kann. Ein derartiges Bewegungsmuster kann beispielsweise in einem der Steuereinrichtung zugeordneten nicht-flüchtigen Speicher gespeichert sein. Das vorbestimmte Bewegungsmuster kann beispielsweise eine horizontale Pendelbewegung, also eine periodische horizontale Hin- und Herbewegung umfassen, die typischerweise bei einer Gehbewegung eines Kameramanns auftreten kann, der die Kamerastabilisierungsanordnung einschließlich der Kamera trägt. Die Bewegungssensorsignale können hierfür beispielsweise nach Bewegungsrichtung und Bewegungsgeschwindigkeit und zugeordneten Zeitdauern kategorisiert werden, wobei diese Werte mit Referenzwerten typischer Bewegungsmuster verglichen werden. Bei derartigen Ausführungsformen kann die Steuereinrichtung dazu ausgebildet sein, die halterseitige Bildstabilisierung für das identifizierte Bewegungsmuster auszusetzen oder zu modifizieren. Hierdurch kann die (typischerweise elektromechanisch durchgeführte) halterseitige Bildstabilisierung gezielt für solche Bewegungsmuster unterdrückt oder abgeschwächt werden, für die bereits bekannt ist, dass die halterseitige Bildstabilisierung ohne Korrektureingriff zu einer Überkompensation der detektierten Bewegungen neigt. Im Falle des Aussetzens der halterseitigen Bildstabilisierung erfolgt insoweit keine halterseitige Bildstabilisierung. Im Falle des Modifizierens der halterseitigen Bildstabilisierung kann die halterseitige Bildstabilisierung beispielsweise abgeschwächt durchgeführt und/oder richtungsselektiv durchgeführt werden. Eine abgeschwächte halterseitige Bildstabilisierung bedeutet, dass diese in einem geringeren Maße durchgeführt wird als in einem Betrieb der Kamerastabilisierungsanordnung ohne Korrektureingriff aufgrund eines Mustervergleichs.

Bei einigen Ausführungsformen kann die Steuereinrichtung dazu ausgebildet sein, die durchgeführte halterseitige Bildstabilisierung oder kameraseitige Bildstabilisierung hinsichtlich eines Gütegrads der durchgeführten Bildstabilisierung auszuwerten und einen entsprechenden Gütewert zu bestimmen. Dies kann beispielsweise dadurch geschehen, dass die Steuereinrichtung einer jeweiligen Maßnahme der halterseitigen Bildstabilisierung oder der kameraseitigen Bildstabilisierung einen vorbestimmten (z.B. in einer Tabelle gespeicherten) Einzelwert zuordnet, wobei über einen zeitlichen Verlauf der durchgeführten Bildstabilisierung mehrere Einzelwerte ermittelt und zu dem Gütewert kombiniert werden. Der Gütewert kann bei einigen Ausführungsformen ebenfalls zeitabhängig bestimmt werden, d.h. einen zeitlichen Verlauf umfassen. Die Steuereinrichtung kann ferner dazu ausgebildet sein, den Gütewert an eine Benutzerschnittstelle auszugeben. Die Ausgabe des Gütewerts kann unmittelbar oder (insbesondere infolge eines Zwischenspeicherns) zeitverzögert erfolgen. Der Benutzer (z.B. Kameramann) kann somit vor der Aufnahme einer Bewegtbildsequenz einen Probelauf durchführen und anhand des hierbei bestimmten und ausgegebenen Gütegrads entscheiden, ob Verbesserungen hinsichtlich der Kameraführung sinnvoll oder erforderlich erscheinen.

Bei einigen Ausführungsformen kann die Kamera dazu ausgebildet sein, während einer Aufnahme einer Bewegtbildsequenz (also einer Filmszene) Bewegtbilddaten auszugeben und/oder zu speichern, wobei die Steuereinrichtung dazu ausgebildet ist, während der Aufnahme der Bewegtbildsequenz zumindest einen Teil der Bewegungssensorsignale und/oder eine Information über die durchgeführte Bildstabilisierung als Metadaten den Bewegtbilddaten zuzuordnen. Die Information über die durchgeführte Bildstabilisierung kann von der Steuereinrichtung in einem vorbestimmten Datenformat zusammengestellt werden, beispielsweise als zeitkodierter Verlauf von Richtungswerten und Größenwerten der durchgeführten halterseitigen und/oder kameraseitigen Bildstabilisierung. Die Bewegungssensorsignale und/oder Information über die durchgeführte Bildstabilisierung können somit zusammen mit den Bewegtbilddaten (insbesondere eingebettet in die Bewegtbilddaten) ausgegeben und/oder gespeichert werden. Somit ist es möglich, nachträglich (insbesondere in der sogenannten Post Produktion) die durchgeführte Bildstabilisierung zu analysieren und/oder zu korrigieren (im Sinne einer Verstärkung oder einer Abschwächung).

Was die halterseitige Bildstabilisierung betrifft, so kann bei einigen Ausführungsformen der elektrische Antrieb des Kamerahalters zumindest einen Elektromotor aufweisen. Als jeweiliger Elektromotor kann beispielsweise ein Schrittmotor oder ein Servomotor verwendet werden, insbesondere mit einem integrierten Untersetzungsgetriebe und/oder mit einer integrierten Positionsregelung. Bei einigen Ausführungsformen kann ein erster Elektromotor vorgesehen sein, um den Kamerahalter relativ zu einer Trägerstruktur der Kamerastabilisierungsanordnung anzutreiben, wobei zumindest ein zweiter Elektromotor vorgesehen ist, um ein bewegliches Element des Kamerahalters relativ zu einem anderen Element des Kamerahalters anzutreiben. Bei einigen Ausführungsformen können Elektromotoren lediglich für ein Antreiben von verschiedenen Elementen des Kamerahalters relativ zueinander vorgesehen sein. Der oder die Elektromotor(en) sind mit der Steuereinrichtung signaltechnisch verbunden und können von der Steuereinrichtung entsprechend angesteuert werden, um Kompensationsbewegungen für die halterseitige Bildstabilisierung durchzuführen.

Was die kameraseitige Bildstabilisierung betrifft, so kann bei einigen Ausführungsformen der Bildsensor der Bilderfassungseinrichtung eine Matrix von lichtempfindlichen Elementen aufweisen, um die Bildsensorsignale zu erzeugen. Wie eingangs erläutert, kann der Bildsensor beispielsweise in CMOS- oder CCD-Technologie gefertigt sein. Eine erste Anzahl von lichtempfindlichen Elementen (insbesondere in einem zentralen Bereich der Matrix von lichtempfindlichen Elementen) kann dazu vorgesehen sein, tatsächlich genutzte Bildsensorsignale zu erzeugen, also Bildsignale, die für das Bilden einer Bewegtbildsequenz tatsächlich genutzt werden sollen und die somit den Bildinhalt einer Bewegtbildsequenz repräsentieren sollen, wobei die betreffenden Bildsensorsignale zu diesem Zweck ausgelesen bzw. von der Kamera ausgegeben und/oder in der Kamera oder außerhalb der Kamera gespeichert werden. Eine zweite Anzahl von lichtempfindlichen Elementen (insbesondere in einem Randbereich der Matrix von lichtempfindlichen Elementen) kann hingegen dazu vorgesehen sein, nicht zum Erzeugen von tatsächlich genutzten Bildsensorsignalen verwendet zu werden. Die Zuordnung der lichtempfindlichen Elemente zu der ersten Anzahl oder der zweiten Anzahl von lichtempfindlichen Elemente kann für zumindest einen Teil der lichtempfindlichen Elementen veränderlich sein. Eine derartige Unterteilung der Matrix von lichtempfindlichen Elementen ist beispielsweise aus US 8063937 B2 bekannt.

Bei derartigen Ausführungsformen kann die Steuereinrichtung dazu ausgebildet sein, in Ansprechen auf die Bewegungssensorsignale die Zuordnung der lichtempfindlichen Elemente zu der ersten Anzahl oder der zweiten Anzahl zu variieren, um ein Auslesefeld entlang der Matrix von lichtempfindlichen Elementen zu versetzen und hierdurch die kameraseitige Bildstabilisierung in elektronischer Weise durchzuführen. Mit anderen Worten kann durch Ändern der Zuordnung der lichtempfindlichen Elemente zu der ersten Anzahl oder der zweiten Anzahl beeinflusst werden, welche Bildsensorsignale für die Darstellung des Bildinhalts beispielsweise einer Filmszene verwendet werden sollen. Durch das Ändern der Zuordnung können unerwünschte Änderungen der Ausrichtung der Kamera in horizontaler und/oder vertikaler Richtung (x/y-Richtung) kompensiert werden (sogenannter Pixel Shift).

Alternativ oder zusätzlich kann bei einigen Ausführungsformen der Bildsensor beweglich gelagert sein, wobei die Bilderfassungseinrichtung ferner eine Bildsensorantriebseinrichtung aufweist, und wobei die Steuereinrichtung dazu ausgebildet ist, in Ansprechen auf die Bewegungssensorsignale des oder der Bewegungssensors/Bewegungssensoren die Bildsensorantriebseinrichtung zu einem Bewegen des Bildsensors anzusteuern, um die kameraseitige Bildstabilisierung in elektromechanischer Weise durchzuführen. Somit können durch ein Versetzen des Bildsensors unerwünschte Änderungen der Ausrichtung der Kamera in horizontaler und/oder vertikaler Richtung (x/y-Richtung) kompensiert werden. Das Versetzen des Bildsensors kann insbesondere entlang einer Ebene erfolgen, die senkrecht zu der optischen Achse der Kamera steht. Die Bildsensorantriebseinrichtung kann beispielsweise einen oder mehrere Piezo-Aktor(en) oder einen oder mehrere Elektromotor(en) aufweisen.

Alternativ oder zusätzlich kann bei einigen Ausführungsformen die Bilderfassungseinrichtung ferner eine dem Bildsensor im Strahlengang vorgelagerte Optickomponente und eine Optikkomponentenantriebseinrichtung aufweisen. Die Steuereinrichtung kann dazu ausgebildet sein, in Ansprechen auf die Bewegungssensorsignale des oder der Bewegungssensors/Bewegungssensoren die Optickomponentenantriebseinrichtung zu einem Bewegen der Optikkomponente anzusteuern, um den Strahlengang des einfallenden Lichts zu beeinflussen und hierdurch die kameraseitige Bildstabilisierung in elektromechanischer Weise durchzuführen. Somit können durch ein Versetzen der Optikkomponente unerwünschte Änderungen der Ausrichtung der Kamera in horizontaler und/oder vertikaler Richtung (x/y-Richtung) kompensiert werden. Das Versetzen der Optikkomponente kann insbesondere entlang einer Ebene erfolgen, die senkrecht zu der optischen Achse der Kamera steht. Die Optikkomponentenantriebseinrichtung kann beispielsweise einen oder mehrere Piezo-Aktor(en) oder einen oder mehrere Elektromotor(en) aufweisen.

Die Erfindung bezieht sich auch auf ein Verfahren zum Steuern einer Kamerastabilisierungsanordnung, die einen bezüglich mehrerer Freiheitsgrade beweglichen Kamerahalter; einen elektrischen Antrieb, der dazu ausgebildet ist, den Kamerahalter gemäß den mehreren Freiheitsgraden anzutreiben; eine an dem Kamerahalter befestigte elektronische Kamera, die eine Bilderfassungseinrichtung aufweist; zumindest einen Bewegungssensor, der dazu ausgebildet ist, Bewegungen des Kamerahalters und/oder der Kamera in mehreren Richtungen zu detektieren und entsprechende Bewegungssensorsignale zu erzeugen; und eine Steuereinrichtung aufweist, die dazu ausgebildet ist, in Ansprechen auf die Bewegungssensorsignale den elektrischen Antrieb zu steuern, um eine halterseitige Bildstabilisierung durchzuführen, und die Bilderfassungseinrichtung zu steuern, um eine kameraseitige Bildstabilisierung durchzuführen; wobei das Verfahren die im Zusammenhang mit der erfindungsgemäßen Kamerastabilisierungsanordnung erläuterten Steuerschritte umfasst.

Die Erfindung wird nachfolgend lediglich beispielhaft unter Bezugnahme auf die Zeichnungen erläutert. Gleiche oder gleichartige Elemente sind darin mit denselben Bezugszeichen gekennzeichnet.
- Fig. 1: zeigt eine Kamerastabilisierungsanordnung.
- Fig. 2: zeigt eine perspektivische Ansicht von Teilen der Kamerastabilisierungsanordnung gemäß Fig. 1.
- Fig. 3: zeigt eine Frontansicht von Teilen der Kamerastabilisierungsanordnung gemäß Fig. 1.
- Fig. 4: zeigt eine schematische Darstellung von Teilen der Kamerastabilisierungsanordnung gemäß Fig. 1.

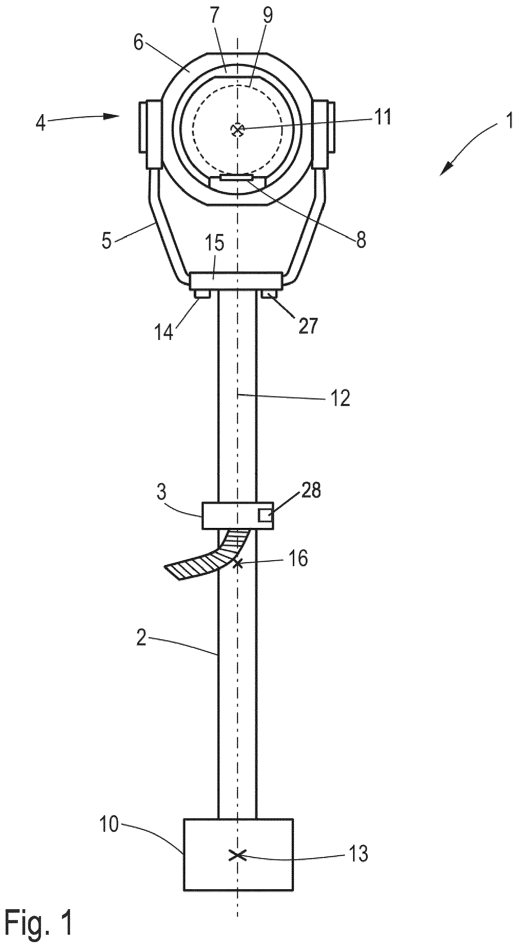

Fig. 1 bis 3 zeigen Teile einer Kamerastabilisierungsanordnung, wie sie bereits in der eingangs genannten Offenlegungsschrift DE 10 2015 107 483 A1 gezeigt und beschrieben ist (Beschreibung ist nachfolgend wiedergegeben):
Fig. 1 zeigt eine teilweise vereinfachte Ansicht einer Kamerastabilisierungsanordnung 1. Diese weist, wie grundsätzlich bekannt, einen Pendelarm 2 auf, der als Trägerstruktur dient und über eine Kopplungseinrichtung 3 mit einem kardanischen Aufhängemittel (hier nicht näher dargestellt) verbunden werden kann. Das kardanische Aufhängemittel kann mit einem Tragearm verbunden sein, der an einem von einer Person getragenen Kleidungsstück befestigt ist.

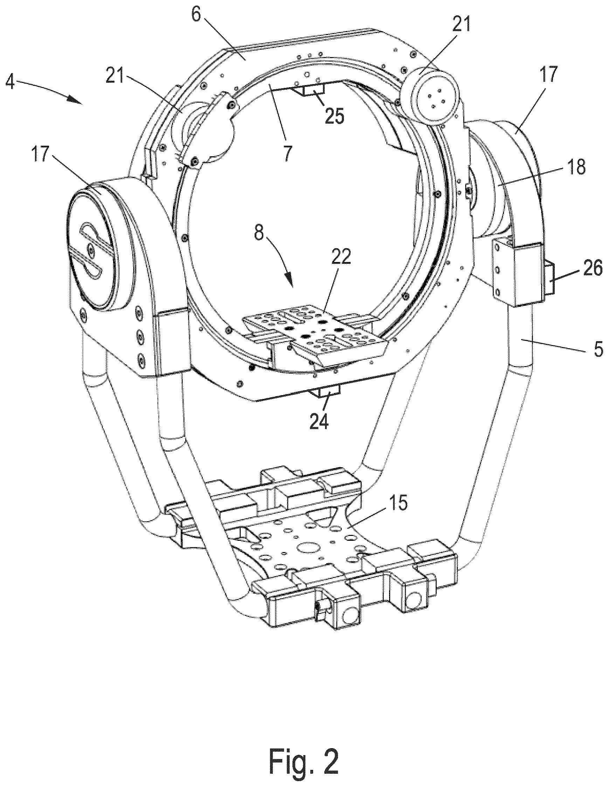

An einem Ende des Pendelarms 2 ist ein Kamerahalter 4 angeordnet, welcher im Hinblick auf die Fig. 2 bis 3 näher erläutert werden wird und einen Halterahmen 5 umfasst, in dem zwei Ringelemente 6, 7 gelagert sind. Das innere, zweite Ringelement 7 weist eine Kamerabefestigungsvorrichtung 8 auf, auf der eine hier nur angedeutete Kamera 9 befestigt ist.

Um ein Ausbalancieren gegenüber dem Kamerahalter 4 mit der Kamera 9 zu ermöglichen, ist am anderen Ende des Pendelarms 2 ein Gegengewicht 10 vorgesehen, so dass der Schwerpunkt der Kamerastabilisierungsanordnung 1 im Bereich der Koppelvorrichtung 3 zu liegen kommt. Das Gegengewicht 10 kann beispielsweise durch eine Energiequelle, insbesondere eine Batterie, einen Monitor und dergleichen, wie es grundsätzlich bekannt ist, gebildet werden. Das Gegengewicht 10 ist zur Einstellung des Schwerpunktes der Kamerastabilisierungsanordnung 1 anpassbar, beispielsweise, indem die Batterie bzw. Teile der Batterie in ihrer Position veränderbar sind, Massenelemente hinzufügbar oder entfernbar sind und dergleichen. Ferner ist die Koppelvorrichtung 3 mittels hier nicht näher gezeigter Verschiebemittel entlang des Pendelarms 2 verschiebbar.

Der Kamerahalter 4 ist so ausgebildet, dass zum einen der Schwerpunkt der Ringanordnung mit den Ringelementen 6, 7 und der Kamera 9 im Zentrum der Ringelemente 6, 7 liegt, wobei zudem der hier nicht näher gezeigte Schwerpunkt des Kamerahalters 4 mit der Kamera 9 wie auch der Schwerpunkt 11 auf einer Längsachse 12 des Pendelarms 2 zu liegen kommen, auf der auch der Schwerpunkt 13 des Gegengewichts liegt. Seitliche Abweichungen des Schwerpunkts des Kamerahalters 4 mit Kamera 9 können über verschiebbare Massenelemente 14, die unterhalt einer Trägerplatte 15 des Halterahmens 5 angeordnet sind, korrigiert werden. Hierzu sind die Massenelemente 14 gleitend, aber arretierbar, in einer schwalbenschwanzartigen Führung (hier nicht näher dargestellt) gelagert.

Nachdem die Kamerastabilisierungsanordnung 1 vorliegend in einer vertikalen Ausrichtung gezeigt ist, in der die Kamera 9 oben angeordnet ist, befindet sich der Schwerpunkt 16 der Kamerastabilisierungsanordnung 1 von der Koppelvorrichtung 3 aus betrachtet eher nach unten zum Gegengewicht 10 hin, so dass eine stabile Vertikalstellung erreicht wird.

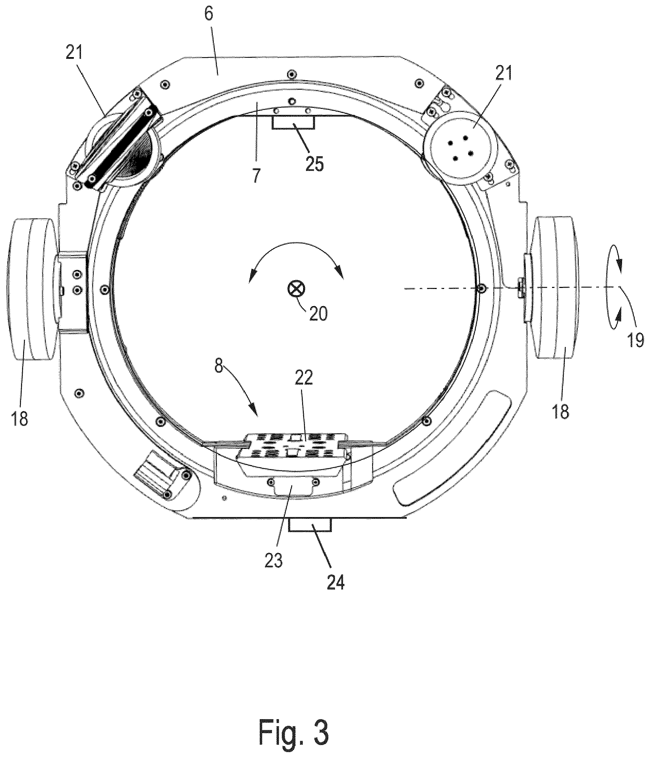

Fig. 2 zeigt eine perspektivische Ansicht des Kamerahalters 4, die, wie bereits erwähnt, den Halterahmen 5 mit der Trägerplatte 15 aufweist, der symmetrisch ausgebildet ist und mittig über entsprechende Befestigungsmittel an einem Ende der des Pendelarms 2 befestigt werden kann (starr oder drehbeweglich). Mit seiner Außenseite im Halterahmen 5 drehbar gelagert ist zunächst das erste, äußere Ringelement 6, wobei in den gezeigten Gehäusen 17 Antriebsmittel 18 enthalten sind, die eine gesteuerte Drehung des ersten Ringelements 6 um eine Tiltachse 19 (vgl. die Vorderansicht der Fig. 3) erlauben. In den Gehäusen 17 sind freihängend an der Welle zur Drehung um die Tiltachse 19 ferner Pendelkörper unwuchtig angelenkt (nicht dargestellt).

Das zweite Ringelement 7 ist wiederum innerhalb des ersten Ringelements 6, entlang der Innenseite (also am Innenumfang) des ersten Ringelements 6, drehbar gelagert, und zwar um eine Rollachse 20 (vgl. wiederum die Frontansicht der Fig. 3) drehbar, die zumindest parallel zur Bildachse der Kamera 9 ist. Zur drehbaren Lagerung des Ringelements 7 in dem Ringelement 6 wird ein hier näher gezeigtes Kugellager verwendet. Auch eine Drehung des zweiten Ringelements 7 in dem ersten Ringelement 6 kann durch entsprechende Antriebsmittel 21 erzielt werden.

Die Fig. 2 und 3 zeigen ferner die Kamerabefestigungsvorrichtung 8, welche vorliegend eine Befestigungsplatte 22 mit verschiedenen Befestigungsmöglichkeiten aufweist. Um die Positionierung des Schwerpunkts 11 der Ringanordnung mit Kamera 9 im Zentrum derselben, also sowohl auf der Rollachse 20 wie auch auf der Tiltachse 19, die hierzu senkrecht steht, zu erreichen, sind in Fig. 3 ferner Verstellmittel 23 angedeutet, die eine Verstellung der Befestigungsplatte 22 und somit der Kamera 9 in drei zueinander senkrechten Raumrichtungen erlaubt. Dies kann auch benutzt werden, um insgesamt den Schwerpunkt 16 der Kamerastabilisierungsanordnung 1 korrekt einzustellen.

An dem ersten Ringelement 6, dem zweiten Ringelement 7 und dem Halterahmen 5 sind ferner als Beschleunigungssensoren ausgebildete Bewegungssensoren 24, 25, 26 angeordnet, mit denen ungewollte Bewegungen erfasst werden können, die zu einer Veränderung der Ausrichtung der Kamera 9, mithin zu einer Abweichung von einer Sollausrichtung, führen können.

Ferner ist an der Unterseite der Trägerplatte 15 des Halterahmens 5 ein Positionssensor 27 angeordnet, mit dem eine Drehbewegung des Halterahmens 5 relativ zu dem Pendelarm 2 erfasst werden kann. Außerdem ist beispielsweise an der Kopplungseinrichtung 3 des Pendelarms 2 (Fig. 1) oder an anderer Stelle (beispielsweise einer Fernsteuereinheit) eine Eingabeeinrichtung 28 angeordnet (z.B. Joystick), mit der Benutzerbefehle für einen erwünschten Antrieb des Kamerahalters 4 zu einer Verstellbewegung eingegeben werden können.

Zu den Fig. 1 bis 3 ist noch anzumerken, dass der Kamerahalter 4 begrifflich von einer Trägerstruktur in Form des Pendelarms 2 unterschieden wurde. Allerdings könnte auch der Pendelarm 2 als Teil des Kamerahalters 4 angesehen werden, insbesondere falls zwischen dem Kamerahalters 4 und dem Pendelarm 2 ein weiteres steuerbares Antriebsmittel (Elektromotor) vorgesehen ist.

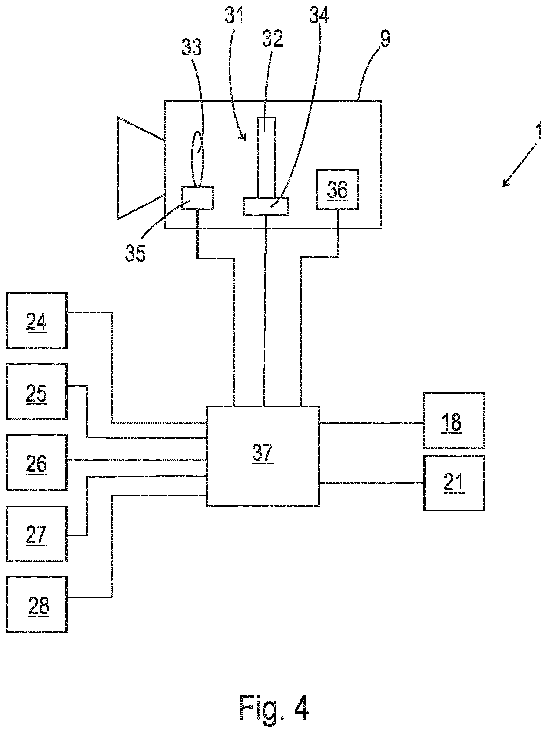

Fig. 4 zeigt ein Blockdiagramm von Teilen der Kamerastabilisierungsanordnung 1. Die Kamerastabilisierungsanordnung 1 weist einen elektrischen Antrieb auf, um den Kamerahalter 4 (Fig. 1 bis 3) gemäß den mehreren Freiheitsgraden anzutreiben, wobei der elektrische Antrieb die Antriebsmittel 18, 21 (z.B. Elektromotoren) und optional noch weitere Antriebsmittel für weitere Freiheitsgrade umfasst (z.B. Drehung des Kamerahalters 4 relativ zu dem Pendelarm 2). Die Kamerastabilisierungsanordnung 1 weist ferner die an dem Kamerahalter 4 bzw. der Kamerabefestigungsvorrichtung 8 (Fig. 1 bis 3) befestigte elektronische Kamera 9 auf, beispielsweise eine Laufbildkamera. Die Kamera 9 weist eine Bilderfassungseinrichtung 31 auf, welche einen Bildsensor 32, eine dem Bildsensor 32 vorgelagerte Optikkomponente 33 (z.B. optische Linse), optional eine Bildsensorantriebseinrichtung 34 und optional eine Optikkomponentenantriebseinrichtung 35 umfasst. Ferner kann die Kamera 9 eine Steuereinheit 36 sowie einen Speicher und eine Schnittstelle für die Ausgabe von Bewegtbilddaten aufweisen (nicht gezeigt).

Die Kamerastabilisierungsanordnung 1 weist ferner die genannten Bewegungssensoren 24, 25, 26 auf, welche die Bewegungen der Elemente des Kamerahalters 4 (Halterahmen 5 und Ringelemente 6, 7; Fig. 1 bis 3) detektieren und entsprechende Bewegungssensorsignale erzeugen. Die Kamerastabilisierungsanordnung 1 weist optional ferner den Positionssensor 27 auf, welcher eine Relativbewegung zwischen dem Halterahmen 5 und dem Pendelarm 2 detektiert und ein entsprechendes Positionssignal erzeugt. Die Kamerastabilisierungsanordnung 1 weist optional ferner die Eingabeeinrichtung 28 auf. Die Kamerastabilisierungsanordnung 1 weist ferner eine Steuereinrichtung 37 auf, welche die Signale der Bewegungssensoren 24, 25, 26 und des Positionssensors 27 sowie die über die Eingabeeinrichtung 28 eingegebenen Benutzerbefehle empfängt.

Die Steuereinrichtung 37 ist dazu ausgebildet ist, in Ansprechen auf die Bewegungssensorsignale der Bewegungssensoren 24, 25, 26 die Antriebsmittel 18, 21 zu steuern, um eine halterseitige Bildstabilisierung durchzuführen, und/oder die Bilderfassungseinrichtung 31 zu steuern, um eine kameraseitige Bildstabilisierung durchzuführen, wie dies vorstehend für verschiedene Ausführungsformen im Einzelnen erläutert wurde. Durch die Möglichkeit, eine halterseitige Bildstabilisierung und eine kameraseitige Bildstabilisierung vorzunehmen und diese aufeinander abzustimmen, kann auf verschiedene Störeinflüsse auf die Ausrichtung der Kamera 9 und/oder auf verschiedene Zustände der Kamerastabilisierungsanordnung 1 jeweils geeignet reagiert werden.

Die halterseitige Bildstabilisierung kann insbesondere dadurch herbeigeführt werden, dass die Steuereinrichtung 37 die Antriebsmittel 18, 21 zu Kompensationsbewegungen ansteuert, die den detektierten Bewegungen entgegenwirken. Die kameraseitige Bildstabilisierung kann insbesondere dadurch herbeigeführt werden, dass hinsichtlich des Auslesens des Bildsensors 32 der erläuterte Pixel Shift durchgeführt wird, oder dass die Steuereinrichtung 37 die Bildsensorantriebseinrichtung 34 zu Kompensationsbewegungen des Bildsensors 32 ansteuert, die den Einflüssen der detektierten Bewegungen entgegenwirken, oder dass die Steuereinrichtung 37 die Optikkomponentenantriebseinrichtung 35 zu Kompensationsbewegungen der Optikkomponente 33 ansteuert, die den Einflüssen der detektierten Bewegungen entgegenwirken. Die Steuereinrichtung 37 kann die Bildsensorantriebseinrichtung 34 und die Optikkomponentenantriebseinrichtung 35 direkt oder über die Steuereinheit 36 der Kamera 9 ansteuern.

Die Steuereinrichtung 37 kann, wie erläutert, insbesondere dazu ausgebildet sein, zwischen zumindest einer Halterkompensation-geeigneten Art der detektierten Bewegungen und zumindest einer Halterkompensation-ungeeigneten Art der detektierten Bewegungen zu unterscheiden und dementsprechend die halterseitige Bildstabilisierung lediglich selektiv durchzuführen. Die Steuereinrichtung 37 kann ferner, wie erläutert, insbesondere dazu ausgebildet sein, die halterseitige Bildstabilisierung und/oder die kameraseitige Bildstabilisierung in Abhängigkeit von einer Frequenz der detektierten Bewegungen lediglich selektiv durchzuführen, wobei insbesondere auch nach verschiedenen Richtungen der detektierten Bewegungen unterschieden werden kann. Die Steuereinrichtung 37 kann ferner, wie erläutert, insbesondere dazu ausgebildet sein, die Antriebsmittel 18, 21 in Ansprechen auf einen über die Eingabeeinrichtung 28 empfangenen Benutzerbefehl zu steuern, um nicht nur eine gemäß dem Benutzerbefehl erwünschte Ausrichtung des Kamerahalters 4 einzustellen, sondern auch die kameraseitige Bildstabilisierung auszusetzen oder zu modifizieren. Die Steuereinrichtung 37 kann ferner, wie erläutert, insbesondere dazu ausgebildet sein, in Ansprechen auf das Positionssignal des Positionssensors 27 die kameraseitige Bildstabilisierung auszusetzen oder zu modifizieren. Die Steuereinrichtung 37 kann ferner, wie erläutert, insbesondere dazu ausgebildet sein, die Bewegungssensorsignale der Bewegungssensoren 24, 25, 26 hinsichtlich eines vorbestimmten Bewegungsmusters auszuwerten und die halterseitige Bildstabilisierung für ein identifiziertes Bewegungsmuster auszusetzen oder zu modifizieren.

### Bezugszeichenliste

- 1: Kamerastabilisierungsanordnung
- 2: Pendelarm
- 3: Kopplungseinrichtung
- 4: Kamerahalter
- 5: Halterahmen
- 6: Ringelement
- 7: Ringelement
- 8: Kamerabefestigungsvorrichtung
- 9: Kamera
- 10: Gegengewicht
- 11: Schwerpunktder Ringanordnung
- 12: Längsachse des Pendelarms
- 13: Schwerpunkt des Gegengewichts
- 14: Massenelement
- 15: Trägerplatte
- 16: Schwerpunkt der Kamerastabilisierungsanordnung
- 17: Gehäuse
- 18: Antriebsmittel
- 19: Tiltachse
- 20: Rollachse
- 21: Antriebsmittel
- 22: Befestigungsplatte
- 23: Verstellmittel
- 24: Bewegungssensor
- 25: Bewegungssensor
- 26: Bewegungssensor
- 27: Positionssensor
- 28: Eingabeeinrichtung
- 31: Bilderfassungseinrichtung
- 32: Bildsensor
- 33: Optikkomponente
- 34: Bildsensorantriebseinrichtung
- 35: Optikkomponentenantriebseinrichtung
- 36: Steuereinheit der Kamera
- 37: Steuereinrichtung der Kamerastabilisierungsanordnung

## Patentansprüche

1. Kamerastabilisierungsanordnung (1), mit:
einem bezüglich mehrerer Freiheitsgrade beweglichen Kamerahalter (4);
einem elektrischen Antrieb (18, 21), der dazu ausgebildet ist, den Kamerahalter (4) gemäß den mehreren Freiheitsgraden anzutreiben;
einer an dem Kamerahalter (4) befestigten elektronischen Kamera (9), die eine Bilderfassungseinrichtung (31) aufweist, welche zumindest einen Bildsensor (32) aufweist, um in Abhängigkeit von einfallendem Licht Bildsensorsignale zu erzeugen;
zumindest einem Bewegungssensor (24, 25, 26), der dazu ausgebildet ist, Bewegungen des Kamerahalters (4) und/oder der Kamera (9) in mehreren Richtungen zu detektieren und entsprechende Bewegungssensorsignale zu erzeugen; und
einer Steuereinrichtung (37), die dazu ausgebildet ist, in Ansprechen auf die Bewegungssensorsignale den elektrischen Antrieb (18, 21) zu steuern, um eine halterseitige Bildstabilisierung durchzuführen, und die Bilderfassungseinrichtung (31) zu steuern, um eine kameraseitige Bildstabilisierung durchzuführen.

2. Kamerastabilisierungsanordnung (1) nach Anspruch 1,
wobei die Steuereinrichtung (37) dazu ausgebildet ist, zwischen zumindest einer Halterkompensation-geeigneten Art der detektierten Bewegungen und zumindest einer Halterkompensation-ungeeigneten Art der detektierten Bewegungen zu unterscheiden; wobei die Steuereinrichtung (37) dazu ausgebildet ist, die halterseitige Bildstabilisierung lediglich für die zumindest eine Halterkompensation-geeignete Art der detektierten Bewegungen, nicht jedoch für die zumindest eine Halterkompensation-ungeeignete Art der detektierten Bewegungen durchzuführen; und wobei die Steuereinrichtung (37) dazu ausgebildet ist, die kameraseitige Bildstabilisierung für die zumindest eine Halterkompensation-ungeeignete Art der detektierten Bewegungen durchzuführen.

3. Kamerastabilisierungsanordnung (1) nach Anspruch 2,
wobei die zumindest eine Halterkompensation-geeignete Art der detektierten Bewegungen eine rotatorische Bewegung umfasst, und/oder wobei die zumindest eine Halterkompensation-ungeeignete Art der detektierten Bewegungen eine translatorische Bewegung umfasst.

4. Kamerastabilisierungsanordnung (1) nach Anspruch 2 oder Anspruch 3, wobei die Steuereinrichtung (37) dazu ausgebildet ist, die zumindest eine Halterkompensation-ungeeignete Art der detektierten Bewegungen in Abhängigkeit von einer aktuellen Positionseinstellung des elektrischen Antriebs (18, 21) und/oder in Abhängigkeit von einer aktuellen Ausrichtung des Kamerahalters (4) zu bestimmen.

5. Kamerastabilisierungsanordnung (1) nach Anspruch 4,
wobei die Steuereinrichtung (37) dazu ausgebildet ist, in Abhängigkeit von der aktuellen Positionseinstellung des elektrischen Antriebs (18, 21) und/oder in Abhängigkeit von der aktuellen Ausrichtung des Kamerahalters (4) die detektierten Bewegungen variabel einer Halterkompensation-geeigneten Art oder einer Halterkompensation-ungeeigneten Art zuzuordnen und die halterseitige Bildstabilisierung oder die kameraseitige Bildstabilisierung entsprechend dieser Zuordnung auszuwählen oder die halterseitige Bildstabilisierung und die kameraseitige Bildstabilisierung entsprechend dieser Zuordnung relativ zueinander zu gewichten.

6. Kamerastabilisierungsanordnung (1) nach einem der vorhergehenden Ansprüche,
wobei die Steuereinrichtung (37) dazu ausgebildet ist, die halterseitige Bildstabilisierung für zumindest eine der mehreren Richtungen lediglich dann durchzuführen, wenn eine Frequenz der detektierten Bewegungen geringer ist als ein erster Grenzwert; und
wobei die Steuereinrichtung (37) dazu ausgebildet ist, die kameraseitige Bildstabilisierung für die zumindest eine der mehreren Richtungen lediglich dann durchzuführen, wenn die Frequenz der detektierten Bewegungen größer ist als ein zweiter Grenzwert.

7. Kamerastabilisierungsanordnung (1) nach Anspruch 6,
wobei der erste Grenzwert und der zweite Grenzwert identisch sind; oder
wobei der erste Grenzwert geringer als der zweite Grenzwert ist, wobei der erste Grenzwert und der zweite Grenzwert einen Übergangsfrequenzbereich begrenzen, in dem die Steuereinrichtung (37) sowohl die halterseitige Bildstabilisierung als auch die kameraseitige Bildstabilisierung durchführt.

8. Kamerastabilisierungsanordnung (1) nach Anspruch 6 oder Anspruch 7, wobei die Steuereinrichtung (37) dazu ausgebildet ist, die halterseitige Bildstabilisierung für verschiedene der mehreren Richtungen der Bewegungen in Abhängigkeit von unterschiedlichen ersten Grenzwerten durchzuführen; und/oder
wobei die Steuereinrichtung (37) dazu ausgebildet ist, die kameraseitige Bildstabilisierung für verschiedene der mehreren Richtungen der Bewegungen in Abhängigkeit von unterschiedlichen zweiten Grenzwerten durchzuführen.

9. Kamerastabilisierungsanordnung (1) nach einem der vorhergehenden Ansprüche,
ferner mit einer Eingabeeinrichtung (28), die dazu ausgebildet ist, Benutzerbefehle für eine erwünschte Bewegung des Kamerahalters (4) zu empfangen; wobei die Steuereinrichtung (37) dazu ausgebildet ist, den elektrischen Antrieb (18, 21) in Ansprechen auf einen empfangenen Benutzerbefehl zu steuern, um eine Ausrichtung des Kamerahalters (4) zu ändern; wobei die Steuereinrichtung (37) ferner dazu ausgebildet ist, in Ansprechen auf den empfangenen Benutzerbefehl die kameraseitige Bildstabilisierung auszusetzen oder zu modifizieren.

10. Kamerastabilisierungsanordnung (1) nach einem der vorhergehenden Ansprüche,
ferner mit zumindest einem Positionssensor (27), der dazu ausgebildet ist, ein Positionssignal zu erzeugen, welches eine vom Benutzer manuell bewirkte Positionsänderung des Kamerahalters (4) repräsentiert;
wobei die Steuereinrichtung (37) dazu ausgebildet ist, in Ansprechen auf das Positionssignal die kameraseitige Bildstabilisierung auszusetzen oder zu modifizieren.

11. Kamerastabilisierungsanordnung (1) nach einem der vorhergehenden Ansprüche,
wobei die Steuereinrichtung (37) dazu ausgebildet ist, die Bewegungssensorsignale auszuwerten, um ein vorbestimmtes Bewegungsmuster von horizontalen und/oder vertikalen Bewegungen zu identifizieren, wobei die Steuereinrichtung (37) dazu ausgebildet ist, die halterseitige Bildstabilisierung für das identifizierte Bewegungsmuster auszusetzen oder zu modifizieren.

12. Kamerastabilisierungsanordnung (1) nach Anspruch 11,
wobei die Steuereinrichtung (37) dazu ausgebildet ist, die Bewegungssensorsignale nach Bewegungsrichtung und Bewegungsgeschwindigkeit und zugeordneten Zeitdauern zu kategorisieren und diese Werte mit Referenzwerten gespeicherter Bewegungsmuster zu vergleichen;
und/oder
wobei das vorbestimmte Bewegungsmuster Bewegungen eines Kameramanns entspricht, der die Kamerastabilisierungsanordnung (1) trägt; und/oder
wobei das vorbestimmte Bewegungsmuster eine horizontale Pendelbewegung umfasst, die bei einer Gehbewegung eines Kameramanns auftritt, der die Kamerastabilisierungsanordnung (1) trägt.

13. Kamerastabilisierungsanordnung (1) nach einem der vorhergehenden Ansprüche,
wobei die Steuereinrichtung (37) dazu ausgebildet ist, die durchgeführte halterseitige Bildstabilisierung oder kameraseitige Bildstabilisierung hinsichtlich eines Gütegrads der durchgeführten Bildstabilisierung auszuwerten, einen entsprechenden Gütewert zu bestimmen und den Gütewert an eine Benutzerschnittstelle auszugeben.

14. Kamerastabilisierungsanordnung (1) nach einem der vorhergehenden Ansprüche,
wobei die Kamera (9) dazu ausgebildet ist, während einer Aufnahme einer Bewegtbildsequenz Bewegtbilddaten auszugeben und/oder zu speichern, wobei die Steuereinrichtung (37) dazu ausgebildet ist, während der Aufnahme der Bewegtbildsequenz zumindest einen Teil der Bewegungssensorsignale und/oder eine Information über die durchgeführte Bildstabilisierung als Metadaten den Bewegtbilddaten zuzuordnen.

15. Kamerastabilisierungsanordnung (1) nach einem der vorhergehenden Ansprüche,
wobei der Bildsensor (32) eine Matrix von lichtempfindlichen Elementen aufweist, um die Bildsensorsignale zu erzeugen, wobei eine erste Anzahl von lichtempfindlichen Elementen dazu vorgesehen ist, tatsächlich genutzte Bildsensorsignale zu erzeugen, und wobei eine zweite Anzahl von lichtempfindlichen Elementen dazu vorgesehen ist, nicht zum Erzeugen von tatsächlich genutzten Bildsensorsignalen verwendet zu werden; wobei eine Zuordnung der lichtempfindlichen Elemente zu der ersten Anzahl oder der zweiten Anzahl für zumindest einen Teil der lichtempfindlichen Elementen veränderlich ist; wobei die Steuereinrichtung (37) dazu ausgebildet ist, in Ansprechen auf die Bewegungssensorsignale die Zuordnung der lichtempfindlichen Elemente zu der ersten Anzahl oder der zweiten Anzahl zu variieren, um die kameraseitige Bildstabilisierung durchzuführen;
und/oder;
wobei der Bildsensor (32) beweglich gelagert ist, wobei die Bilderfassungseinrichtung (31) ferner eine Bildsensorantriebseinrichtung (34) aufweist, und wobei die Steuereinrichtung (37) dazu ausgebildet ist, in Ansprechen auf die Bewegungssensorsignale die Bildsensorantriebseinrichtung (34) zu einem Bewegen des Bildsensors (32) anzusteuern, um die kameraseitige Bildstabilisierung durchzuführen;
und/oder
wobei die Bilderfassungseinrichtung (31) ferner eine dem Bildsensor (32) vorgelagerte Optikkomponente (33) und eine Optikkomponentenantriebseinrichtung (35) aufweist, und wobei die Steuereinrichtung (37) dazu ausgebildet ist, in Ansprechen auf die Bewegungssensorsignale die Optikkomponentenantriebseinrichtung (35) zu einem Bewegen der Optikkomponente (33) anzusteuern, um die kameraseitige Bildstabilisierung durchzuführen.
